# EUROPEAN PATENT APPLICATION

(11) **EP 2 354 519 A2**
(43) Date of publication of application: **10.08.2011**
(21) Application number: 11152065.6
(22) Date of filing: 25.01.2011
(51) Int. Cl.: F02M 21/02, F02M 61/18, F02M 51/06

(54) **Valve seat for gaseous fuel injector**

(30) Priority: 02.02.2010 US 698348
(71) Applicant: Delphi Technologies, Inc., Troy, MI 48007 (US)
(72) Inventor: Fujita, Mahoro M., Fairport, NY 14450 (US); Wells, Allan Richard, Rochester, NY 14606 (US); Dauer, Kenneth John, Lima, NY 14485 (US)
(74) Representative: Denton, Michael John

(57) **Abstract**

A gaseous fuel injector is provided with a fuel inlet, a fuel outlet, and a conduit for communicating fuel from the inlet to the outlet. A valve and valve seat is provided for selectively preventing and permitting fuel to pass from the fuel inlet to the fuel outlet. The valve seat has a plurality of apertures for providing fluid communication therethrough. The valve has a sealing face for selectively engaging and disengaging the valve seat to selectively prevent and permit fuel from passing therethrough. The valve seat includes a raised seating surface for sealing against the sealing face when the valve is engaged with the valve seat. The raised seating surface is defined by at least one wall that continuously surrounds each aperture. Each wall is in continuous fluid communication with the entirety of each wall downstream of the sealing face when the valve is engaged with the valve seat.

## Description

### TECHNICAL FIELD OF INVENTION

The present invention relates to fuel injectors for supplying fuel to a fuel consuming device; and more particularly to fuel injectors for supplying a gaseous fuel to an internal combustion engine; and most particularly to a valve seat for such fuel injectors.

### BACKGROUND OF INVENTION

One type of fuel that is used to power internal combustion engines and other fuel consuming devices is a gaseous fuel such as natural gas in the form of compressed natural gas (CNG) or liquefied petroleum gas (LPG). Fuel injectors for supplying a metered amount of gaseous fuel to a fuel consuming device such as an internal combustion engine are well known. In a typical fuel injector, a valve is located in a fuel passage of the fuel injector and is axially reciprocated in and out of contact with a valve seat to control the flow of fuel through the fuel injector. There are several known configurations of interfaces between the valve and corresponding valve seat.

One valve and valve seat configuration is shown in United States Patent number 6,405,947. In this configuration, a spherically shaped valve is reciprocated in and out of contact with a valve seat that has a single aperture therethrough. The valve seat defines a conical seating surface with which the spherical shaped valve is able to interface in order to stop and start flow through the valve seat. While this configuration can perform satisfactorily for liquid fuels, it can often be unsatisfactory for gaseous fuels because of the higher flow rate that is needed for gaseous fuels. When gaseous fuels are used, the aperture is starved for fuel when the valve is first lifted from the seat because of the limited amount of fuel available at the periphery of the aperture. In order to increase the flow in this configuration, the diameter of the aperture through the seat can be increased or the valve stroke, that is the distance the valve is lifted from the seat, can be increased. However, increasing the diameter of the flow passage through the valve seat also increases the hydraulic load on the valve and therefore the fuel injector requires an actuator of increased capacity in order to overcome the increased hydraulic load. This adds cost and packaging size to the fuel injector. Increasing the amount of lift applied to the valve is also undesirable because increasing the lift will also increase the time needed to open and close the valve which results in unsatisfactory fuel injector performance.

Another valve and valve seat configuration is shown in United States Patent Application Publication number 2007/0029413. In this configuration, a flat valve seat is provided with a single central aperture. A valve with a circular configuration is reciprocated in and out of contact with the flat seat to stop and start flow through the valve seat. This configuration has the same drawbacks as discussed earlier for United Stated Patent number 6,405,947.

Still another valve and seat configuration is shown in United States Patent number 5,348,233. In this configuration, a valve seat is provided with three arcuate apertures through the valve seat and a seating surface raised above the main portion of the valve seat and surrounding the arcuate passages. The raised seating surface is defined by a discontinuous wall that surrounds each of the arcuate passages, that is, the wall has an exterior diameter that is discontinuous from an interior diameter. A flat valve with a central fuel flow passage is reciprocated in and out of contact with the raised seating surface to stop and start flow of fuel through the valve seat. When the flat valve is seated against the valve seat, the wall is not in continuous fluid communication with the entirety of the wall below the valve because the exterior diameter of the wall is discontinuous with the interior diameter. The central flow passage in the valve provides fuel to the inside diameter of the wall defining the raised seating surface. Since this configuration includes a central flow path through the valve, flow is increased without increasing hydraulic loads. This is due to the fact that fuel is available at a greater perimeter length of the passages through the valve seat as soon as the valve is moved out of contact with the valve seat. However, adding a central fuel flow passage to the valve in order to supply fuel to the interior diameter of the wall adds complexity and cost to the fuel injector. Another shortcoming of this arrangement is that the arcuate passages of the valve seat can be difficult to form using metal injection molding (MIM) and powder metal process.

What is needed is a gaseous fuel injector that provides high flow with low hydraulic load and a small valve lift and that does not require a central flow passage through the valve.

### SUMMARY OF THE INVENTION

Briefly described, the present invention provides a fuel injector for supplying fuel to a fuel consuming device. The fuel injector includes a fuel inlet for receiving fuel, a fuel outlet for dispensing fuel from the fuel injector, a conduit for communicating fuel from the fuel inlet to the fuel outlet, and a valve assembly for selectively preventing and permitting fuel to pass from the fuel inlet to the fuel outlet. The valve assembly includes a valve seat with an upstream face, a downstream face, and a plurality of apertures for providing fluid communication between the upstream face and the downstream face. The valve assembly also includes a valve having a sealing face. The valve is located in the conduit upstream of the valve seat for selectively preventing and permitting fuel flow through the valve seat by selectively engaging and disengaging the valve seat. The valve seat further includes a raised seating surface extending above the upstream face defined by the coplanar upper edges of sealing walls, one surrounding each aperture completely. Gaps through and between the individual sealing walls or wall assure continual fluid flow to and around the perimeter of each wall (and thereby to each aperture) when the valve is closed. Complete and immediate flow to each aperture is thus assured when the valve opens.

The valve sealing face engages said raised seating surface when said valve is closed to prevent fuel flow through said valve seat when said valve is engaged with said valve seat. Said at least one sealing wall has provision to allow continual fluid flow access to the entire perimeter of all walls and apertures when said valve is closed. Also, an individual wall surrounds an individual one of each of said plurality of apertures. In the fuel injector, at least one of said plurality of apertures is a slot that has a length greater than its width and at least one of said at least one slots is straight and has a length to width ratio of at least 4 to 1. The valve seat has four apertures and each of said four apertures is a slot that has a length to width ration of at least 4 to 1.Also, the azimuthally adjacent slots are substantially perpendicular to each other.

In the fuel injector said valve seat is made from a method selected from the group consisting of metal injection molding and powder metal processing. Also, said fuel injector is a gaseous fuel injector.

### BRIEF DESCRIPTION OF DRAWINGS

This invention will be further described with reference to the accompanying drawings in which:
Fig. 1 is a cross section of a fuel injector in accordance with the present invention;
Fig. 2 is an isometric view of a valve seat in accordance with the present invention;
Fig. 3 is a cross section of a valve seat through line 3-3 of Fig. 2 in accordance with the present invention; and
Fig. 4 is a graph comparing flow through a fuel injector in accordance with the present invention to prior art fuel injectors.

### DESCRIPTION OF THE PREFERRED EMBODIMENTS

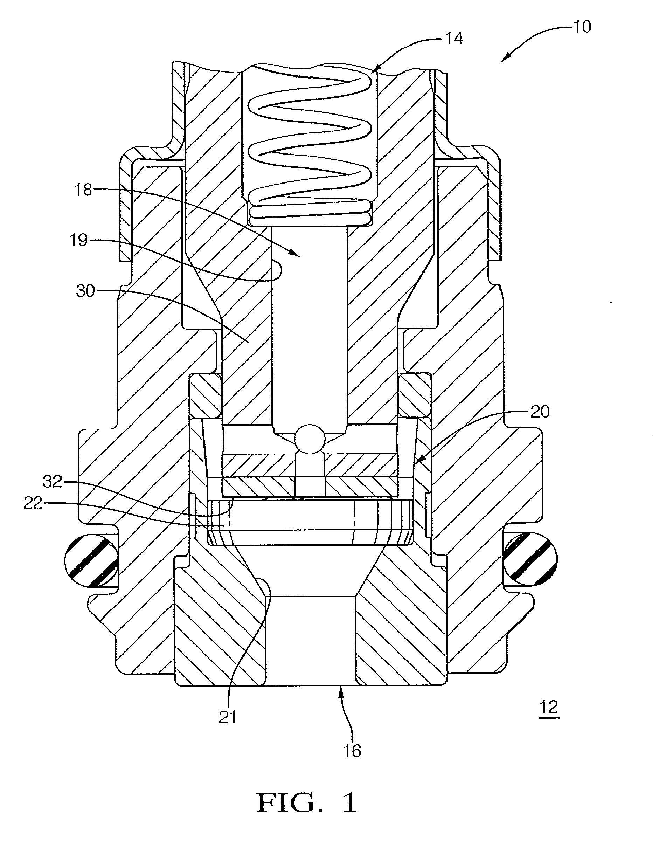

In accordance with a preferred embodiment of this invention and referring to Fig. 1, a portion of fuel injector 10 is shown for supplying fuel to a fuel consuming device 12. Fuel injector 10 includes fuel inlet 14 for receiving fuel, fuel outlet 16 for dispensing fuel from fuel injector 10, and conduit 18 for communicating fuel from fuel inlet 14 to fuel outlet 16. Fuel inlet 14 is upstream of fuel outlet 16.

Now referring to Figs. 1-3, valve assembly 20 is provided for selectively preventing and permitting fuel to pass from fuel inlet 14 to fuel outlet 16. Valve assembly 20 includes valve seat 22 with upstream face 24 and downstream face 26. Upstream face 24 is upstream of downstream face 26. Valve seat 22 divides conduit 18 into upstream section 19 which is upstream of valve seat 22 and a down stream section 21 which is downstream of valve seat 22. A plurality of apertures 28 is provided through valve seat 22 for providing fluid communication between upstream face 24 and downstream face 26.

Valve assembly 20 is also provided with valve 30 having sealing face 32. Valve 30 is disposed in conduit 18 for selectively preventing and permitting fuel flow through valve seat 22 by selectively engaging and disengaging valve seat 22, thereby preventing and permitting fuel to flow from fuel inlet 14 to fuel outlet 16. Selective engagement and disengagement of valve 30 with valve seat 22 is accomplished by axially reciprocating valve 30 in conduit 18 with an actuator (not shown). Actuators for reciprocating a valve in a fuel injector are well known to those skilled in the art of fuel injectors and will not be discussed further herein.

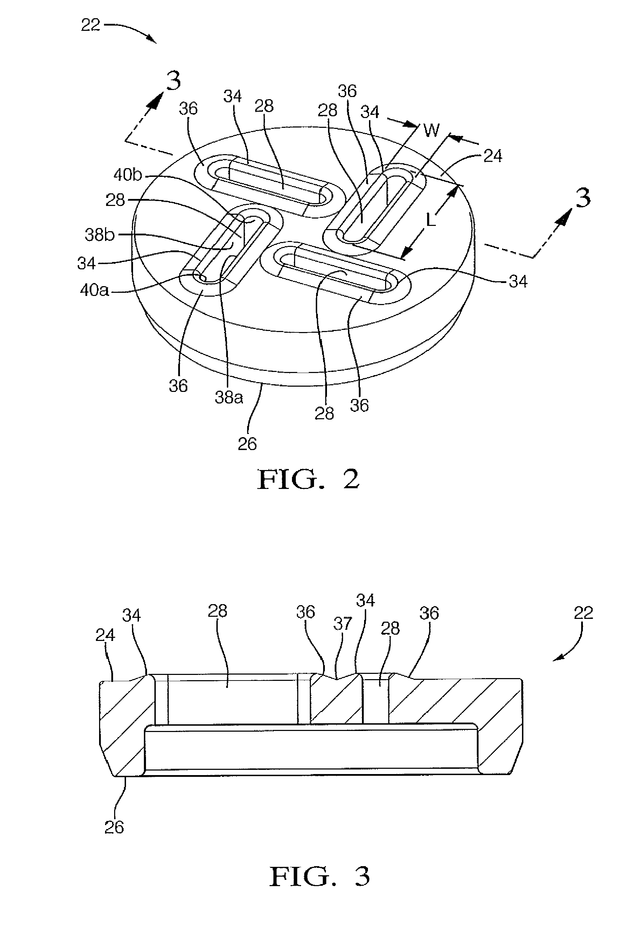

Valve seat 22 includes raised seating surface 34 that extends above upstream face 24 of valve seat 22. When valve 30 is engaged with valve seat 22, valve sealing face 32 seals against raised seating surface 34 to prevent fuel flow through valve seat 22. The raised seating surface 34 is defined by at least one wall 36, each one of which continuously surrounds a respective one of the apertures 28. Each wall 36 stands proud of the valve seat upstream face 24, with an upper edge lying co planar to the upper edge of all other walls 36 and thereby creating the raised seating surface 34. Each wall 36 may have sloped or inclined sides relative to valve seat upstream face 24, or may alternatively be substantially perpendicular to valve seat upstream face 24. Each wall 36 is arranged relative to the others such that it allows full fluid access to the entire perimeter of every other wall 36 when the valve sealing face 32 is brought into sealing contact with the upper edges of all of the walls 36 that provide the raised seating surface 34. Continuous fluid access to the entire perimeter of each wall 36 is assured by gaps or spaces 37 formed between adjacent walls 36. When valve sealing face 32 is engaged with the seating surface provided by the upper edges of the walls 36, the gaps 37 continue to admit fuel flow around the entire perimeter of all of the walls 36 and, thereby, into each aperture 28 as soon as valve 30 is disengaged from valve seat 22. This results in increased flow without increasing the aperture area and without increasing the valve stroke. Preferably, and as shown in Fig. 2, each wall 36 surrounds only one aperture 28. However, each wall 36 may surround more than one aperture, so long as at least on gap 37 is provided.

Apertures 28 in valve seat 22 are preferably elongated slots with length L and width W where length L is greater than width W. It is also preferable that the ratio of length L to width W is at least 4 to 1. By providing valve seat 22 with elongated apertures 28, the ratio of the sum of perimeter length of each wall 36 to the sum of area of each aperture 28 increases thereby allowing a greater amount of fuel to be immediately available to the apertures 28 as soon as valve 30 is disengaged from valve seat 22.

Apertures 28 in the form of elongated slots are preferably defined by straight sections 38a, 38b that are substantially straight and substantially parallel to each other. Apertures 28 may be further defined by arcuate sections 40a, 40b that connect straight sections 38a, 38b at opposing ends thereof. Arcuate sections 40a, 40b together preferably do not make up more than one fourth of length L of aperture 28 while considering aperture 28 to be a straight slot. Apertures 28 in the form of elongated slots allow valve seat 22 to be easily manufactured using metal injection molding or powder metal process which allow valve seat 22 and its related features to be net formed with little or no further processing.

Valve seat 22 preferably has four apertures 28 for providing fluid communication between upstream face 24 and downstream face 26. The four apertures 28 are preferably slots with a length L to width W ratio of at least 4 to 1 and are arranged such that azimuthally adjacent slots are substantially perpendicular to each other.

Although not illustrated, one of ordinary skill in the art will now recognize and appreciate that other quantities, shapes, and placement of apertures 28 may be used in accordance with the present invention. Similarly, one of ordinary skill in the art will now also recognize and appreciate that many combinations of quantities of apertures 28 and walls 36 may be used in accordance with the present invention.

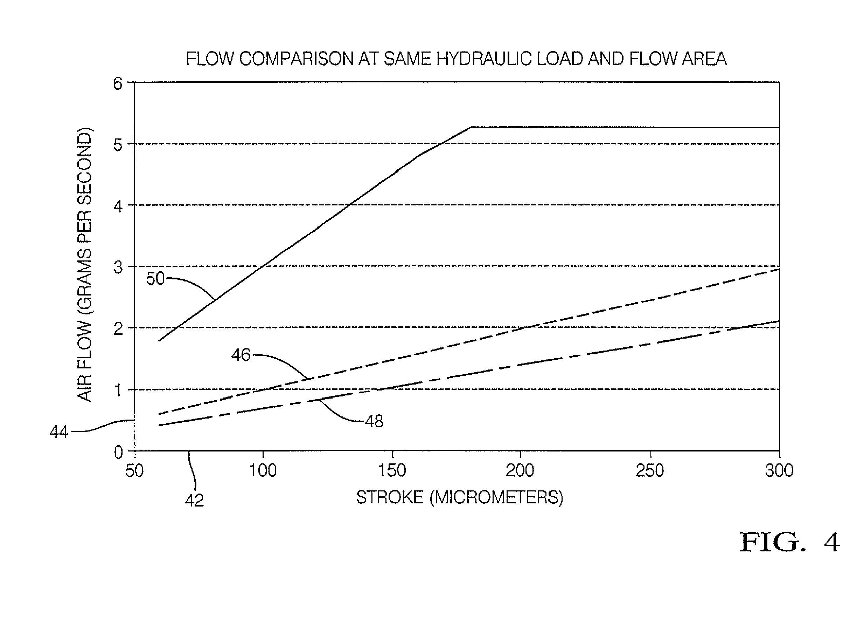

Referring now to Fig. 4, a graph illustrating the flow rate produced by a fuel injector in accordance with the present invention is compared with the flow rates produced by two prior art fuel injectors. This data was collected by measuring the flow rate of pressurized air through the subject fuel injectors. Pressurized air provides a safe alternative for testing purposes that correlates to the flow rate that would be achieved when using gaseous fuels in the fuel injector. In this example, each of the three subject fuel injectors has a valve seat with apertures that provide 3.7 square millimeters of flow area. Since the three subject fuel injectors have valve seats with equivalent flow areas, all three fuel injectors are subjected to the same hydraulic load and therefore require the same actuator force to actuate the fuel injectors. In Fig. 4, the abscissa axis 42 represents the valve stroke or distance the valve is moved in micrometers from the valve seat in each fuel injector while the ordinate axis 44 represents the flow rate achieved in grams per second for each fuel injector.

One prior art fuel injector used to create Fig. 4 uses a valve seat with a single aperture where the valve seat defines a conical seating surface. A spherical shaped valve is reciprocated in and out of contact with the valve seat to stop and start flow through the valve seat. This prior art fuel injector is similar that shown in United States Patent number 6,405,947 which was discussed earlier. The flow rate of this spherical valve is illustrated in Fig. 4 by spherical valve trace 46.

The second prior art fuel injector used to create Fig. 4 uses a flat valve seat with a single central aperture in which a valve with a circular configuration is reciprocated in and out of contact with the valve seat. This prior art fuel injector is similar to that shown in United States Patent Application Publication number 2007/0029413 which was discussed earlier. The flow rate of this flat valve is illustrated in Fig. 4 as flat valve trace 48.

The third valve trace in Fig. 4, slotted valve trace 50, illustrates the flow rate of a fuel injector in accordance with the present invention. As can be seen, slotted valve trace 50 shows a substantially higher flow rate results at any given valve stroke as compared to spherical valve trace 46 and flat valve trace 48. A desirable and typical flow rate requirement for a gaseous fuel injector is between 3 and 4 grams per second. In order to achieve a flow of 3 grams per second, slotted valve trace 50 shows a valve stroke of approximately 100 micrometers is required. This compares to a valve stroke of approximately 300 micrometers for spherical valve trace 46 and an even larger valve stroke for flat valve trace 48 to achieve the same 3 grams per second flow rate.

While this invention has been described in terms of the preferred embodiments thereof, it is not intended to be so limited, but rather only to the extent set forth in the claims that follow.

## Claims

1. A fuel injector (10) for supplying fuel to a fuel consuming device, said fuel injector (10) comprising:
a fuel inlet (14) for receiving fuel;
a fuel outlet (16) for dispensing fuel from said fuel injector (10);
a conduit for communicating fuel from said fuel inlet to said fuel outlet; and
a valve assembly (20) for selectively preventing and permitting fuel to pass from said fuel inlet (14) to said fuel outlet (16), said valve assembly (20) comprising:
a valve seat (22) with an upstream face (24), a downstream face (26), and a plurality of apertures (28) for providing fluid communication between said upstream face (24) and said downstream face(26); and
a valve (30) having a sealing face (32), said valve (30) being located in said conduit upstream of said valve seat (22) for selectively preventing and permitting fuel flow through said valve seat (22) by selectively engaging and disengaging said valve seat (22);
wherein said valve seat (22) includes a raised seating surface (34) extending above said upstream face (24) and defined by the upper edges of at least one sealing wall (36) completely surrounding each of the apertures, said valve sealing face (32) engaging said raised seating surface (34) when said valve (30) is closed to prevent fuel flow through said valve seat (22) when said valve (30) is engaged with said valve seat (22), said at least one sealing wall (36) having provision to allow continual fluid flow access to the entire perimeter of all walls (36) and apertures (28) when said valve (30) is closed.

2. A fuel injector (10) as in claim 1, wherein an individual wall (36) surrounds an individual one of each of said plurality of apertures (28).

3. A fuel injector (10) as in any of the preceding claim, wherein at least one of said plurality of apertures (28) is a slot that has a length (L) greater than its width (W).

4. A fuel injector (10) as in claim 3, wherein at least one of said at least one slots (28) is straight.

5. A fuel injector (10) as in claim 4, wherein at least one of said at least one straight slots (28) has a length (L) to width (W) ratio of at least 4 to 1.

6. A fuel injector (10) as set in any of the preceding claim, wherein said valve seat (22) has four apertures (28) and each of said four apertures (28) is a slot.

7. A fuel injector (10) as in claim 6, wherein each of said slots (28) has a length (L) to width (W) ration of at least 4 to 1.

8. A fuel injector (10) as in claim 6, wherein azimuthally adjacent slots (28) are substantially perpendicular to each other.

9. A fuel injector (10) as in claim 1, wherein said valve seat (22) is made from a method selected from the group consisting of metal injection molding and powder metal processing.

10. A fuel injector (10) as in claim 1, wherein said fuel injector (10) is a gaseous fuel injector.
